# EUROPEAN PATENT SPECIFICATION

(11) **EP 4 101 713 B1**
(45) Date of publication and mention of the grant of the patent: **23.07.2025**
(21) Application number: 21178214.9
(22) Date of filing: 08.06.2021
(51) Int. Cl.: B60W 30/12, B60W 50/14, B60W 50/00

(54) **A METHOD FOR AUTOMATICALLY REACTIVATING A LANE DEPARTURE WARNING AND/OR LANE KEEPING DRIVER ASSISTANCE SYSTEM OF A VEHICLE**
VERFAHREN ZUR AUTOMATISCHEN REAKTIVIERUNG EINES SPURABWEICHUNGSWARNUNGS- UND/ODER SPURHALTESYSTEMS EINES FAHRZEUGS
PROCÉDÉ DE RÉACTIVATION AUTOMATIQUE D'UN SYSTÈME D'ASSISTANCE AU CONDUCTEUR D'UN VÉHICULE POUR L'AVERTISSEMENT DE SORTIE DE VOIE ET/OU LE MAINTIEN DE VOIE

(43) Date of publication of application: 14.12.2022
(73) Proprietor: Volvo Truck Corporation, 405 08 Göteborg (SE)
(72) Inventor: ÖST, David, 413 27 Göteborg (SE)
(74) Representative: Kransell & Wennborg KB

(56) References cited:
- EP-B1- 1 077 826
- DE-A1- 102005 057 251
- DE-B4- 10 311 241
- GB-A- 2 496 975

## Description

### TECHNICAL FIELD

The invention relates to a method for automatically reactivating a lane departure warning and/or lane keeping driver assistance system of a vehicle. The invention also relates to a vehicle control unit and to a vehicle.

The invention can be applied in heavy-duty vehicles, such as trucks, buses and construction equipment. Although the invention will be described with respect to a truck, the invention is not restricted to this particular vehicle, but may also be used in other vehicles such as passenger cars.

### BACKGROUND

It is known to use lane departure warning and/or lane keeping driver assistance systems for vehicles. These systems are providing increased safety and driver comfort during driving.

Even though the systems are often very supportive and helpful for a driver, they may sometimes be perceived as annoying.

### SUMMARY

In view of the above, an object of the invention is to provide an improved method which alleviates one or more of the drawbacks of the prior art, or which at least provides a suitable alternative. A yet further object of the invention is to provide a vehicle control unit which alleviates one or more of the drawbacks of the prior art, or which at least provides a suitable alternative. A yet further object is to provide an improved vehicle comprising a vehicle control unit.

According to a first aspect, the object is achieved by a method according to claim 1.

Thus, a method for automatically reactivating a lane departure warning and/or lane keeping driver assistance system of a vehicle is provided. The method comprises:
- deactivating the system at a deactivation time point;
- identifying a first road condition which is associated with the deactivation time point when the system is being deactivated, wherein the first road condition is indicative of a driving situation when the driver wants the system to be deactivated;
- setting a reactivation threshold value, wherein the reactivation threshold value is set based on the identified first road condition and defines a limit for when the first road condition no longer applies; and
- automatically reactivating the system when it is determined that the reactivation threshold value is reached.

By the provision of the present invention, the lane departure warning and/or lane keeping driver assistance system will be automatically reactivated when the first road condition no longer applies. More specifically, the present invention is based on a realization that it would be beneficial to automatically reactivate such a system after it has been deactivated due to the first road condition, and to automatically reactivate it when the first road condition no longer applies. This implies increased safety and driver comfort since the driver will not need to manually reactivate the system again after the first road condition no longer applies. In addition, if the system is not automatically reactivated there is a high risk that the driver will forget to reactivate the system. As such, by the present invention it can be assured that the system will be active more frequently, implying increased safety.

The first road condition may be identified at, or in the proximity of, the deactivation time point. Additionally, or alternatively, the first road condition may be identified by monitoring road conditions over a road condition time period, such as a road condition time period starting at the deactivation time point and continuing for a specific time, such as continuing for a predetermined time. Thereby, according to an example embodiment, the first road condition may be identified by identifying reoccurring and/or continuous road conditions during the road condition time period. Purely by way of example, and as also exemplified in the below, the reoccurring and/or continuous road conditions may relate to a lane width and/or an average lane width over a time period during driving, a road curvature and/or an average road curvature value over a time period during driving, a type of road section, such as a country road or any other relatively narrow road section, a road work area, or any other reoccurring or continuous road condition when the driver wants the system to be deactivated.

The first road condition is defined as a lane width or a road curvature. In other examples not covered by the invention, the first road condition is defined as any condition associated with the road on which the vehicle is travelling, including but not limited to at least one of a road work area, traffic jam, a type of road, a speed limit and a weather condition.

The first road condition may be predefined, such as predefined by a user, for example by the driver. Thereby, it enables e.g. the driver to predefine and decide which road condition(s) should be monitored and identified. This may also facilitate processing power required for the identification, in that there already may be a list of road conditions to look for when the system has been deactivated.

Optionally, the first road condition may be defined by use of a machine learning algorithm, whereby the machine learning algorithm has been trained by identifying road conditions when the system, and/or when similar and/or the same type of systems of other vehicles, has/have been deactivated. Thereby, one or more road conditions may be defined, which road conditions relate to a situation when the driver wants the system to be deactivated. Accordingly, and purely by way of example, the first road condition may be part of a list of a plurality of predefined road conditions which all are indicative of a situation when the driver wants the system to be deactivated.

According to the invention, deactivating the system is performed when the driver manually initiates a deactivation command. Thereby, the first road condition may be better associated with an action performed by the driver, implying increased driver comfort. Optionally, the deactivation command may be initiated by the driver manually deactivating the system via a human machine interface (HMI), such as via a HMI of the vehicle. The driver as mentioned herein shall be interpreted broadly, i.e. it may not only be an on-board driver but could additionally/alternatively be an off-board driver which remotely drives the vehicle.

Optionally, the deactivation command may be initiated by the driver performing a driving manoeuvre which is above a predetermined driver manoeuvre threshold value. For example, the driving manoeuvre may be a steering manoeuvre and the predetermined driver manoeuvre threshold value may be a steering manoeuvre threshold value, such as a steering angular change threshold value. Additionally, or alternatively, the driving manoeuvre may be defined by a sequence of manoeuvres and/or a specific driving style.

Optionally, deactivating the system may be performed automatically when a predetermined deactivation threshold value is reached. For example, the method may further comprise monitoring of road conditions during driving of the vehicle, wherein the system is automatically deactivated when the predetermined deactivation threshold value is reached. Accordingly, as an example, the deactivation threshold value may be defined by a specific road condition.

Optionally, the method may further comprise generating a warning signal if not any road condition is identified which is indicative of a driving situation when the driver wants the system to be deactivated. Thereby the driver may be informed, by e.g. visual, audio and/or haptic feedback, that no road condition was identified, and that thereby the driver will need to manually reactivate the system again. This situation especially applies when the driver has manually initiated the deactivation command.

According to a first alternative of the invention, the first road condition is a lane width identified at the deactivation time point when the system is being deactivated, wherein the identified lane width defines a lane width threshold below which the driver wants the system to be deactivated. Accordingly, the reactivation threshold value is set based on the lane width threshold. Optionally, the lane width identified at the deactivation time point may be an average lane width based on a plurality of lane widths obtained over a time period during driving of the vehicle. Accordingly, as an example, the system may be automatically reactivated when the lane width exceeds the lane width threshold which is defined by the average lane width. In other words, the reactivation threshold value may be set based on the average lane width.

Still optionally, the reactivation threshold value may be at least set based on the identified lane width together with a specific lane width safety margin, resulting in a reactivation threshold value which is at least defined by a larger lane width than the identified lane width. Thereby it may for example be assured that the system is not automatically reactivated too early, implying increased driver comfort.

According to a second alternative of the invention, the first road condition is a road curvature identified at the deactivation time point when the system is being deactivated, wherein the identified road curvature defines a road curvature threshold above which the driver wants the system to be deactivated. Accordingly, the reactivation threshold value may be set based on the road curvature threshold. Optionally, the road curvature identified at the deactivation time point may be an average road curvature value based on a plurality of road curvature values obtained over a time period during driving of the vehicle. Accordingly, as an example, the system may be automatically reactivated when the road curvature decreases below the road curvature threshold which is defined by the average road curvature value. In other words, the reactivation threshold value may be set based on the average road curvature value.

Optionally, the first road condition may be indicative of a road work area.

Still optionally, the first road condition may be identified by automatically reading a road sign associated with the road on which the vehicle is travelling. For example, the road sign may be a road work sign, a speed limit sign, a road type road sign, such as a sign for a country road or the like.

Optionally, the method may further comprise informing the driver when the system is deactivated. Thereby, the driver will be made aware of that the system is not active, implying increased awareness, improved safety and driver comfort.

Optionally, the method may further comprise informing the driver when the system is automatically reactivated.

Optionally, the first road condition may be identified by use of at least one vehicle perception sensor, such as a perception sensor of the system, and/or by use of data from a database, such as map data from a map database. The at least one vehicle perception sensor may for example be a camera, a light detection and ranging (LIDAR) sensor, a radio detection and ranging (RADAR) sensor, a sound navigation and ranging (SONAR) sensor, an ultrasonic sensor or the like, or any combination therebetween.

According to a second aspect, the object is achieved by a vehicle control unit according to claim 14.

Advantages and effects of the second aspect of the invention are analogous to the advantages and effects of the first aspect of the invention. It shall also be noted that all embodiments of the first aspect of the invention are combinable with all of the embodiments of the second aspect of the invention and vice versa.

The vehicle control unit is preferably an electronic control unit (ECU) of the vehicle, and may comprise hardware or hardware and software for performing the method as disclosed herein. The vehicle control unit may be one single control unit or it may be a plurality of communicatively connected sub-control units. The vehicle control unit may be denoted a computer.

According to a third aspect of the invention, the object is achieved by a vehicle according to claim 15. Thus, a vehicle is provided which comprises a lane departure warning and/or lane keeping driver assistance system, and further comprises the vehicle control unit according to any one of the embodiments of the second aspect of the invention.

Advantages and effects of the third aspect of the invention are analogous to the advantages and effects of the first and second aspects of the invention. It shall also be noted that all embodiments of the third aspect of the invention are combinable with all of the embodiments of the first and second aspects of the invention and vice versa.

According to a further aspect of the invention, the object is also achieved by a computer program comprising instructions which, when the program is executed by a computer, cause the computer to carry out the method according to any one of the embodiments of the first aspect of the invention.

According to a yet further aspect of the invention, the object is also achieved by a computer readable medium comprising instructions which, when executed by a computer, cause the computer to carry out the method according to any one of the embodiments of the first aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle according to an embodiment of the present invention;
Fig. 2 is a schematic view from above of a road section and shows an embodiment of the present invention; and
Fig. 3 is a flowchart of an embodiment of the present invention.

### DETAILED DESCRIPTION OF EXAMPLE EMBODIMENTS OF THE INVENTION

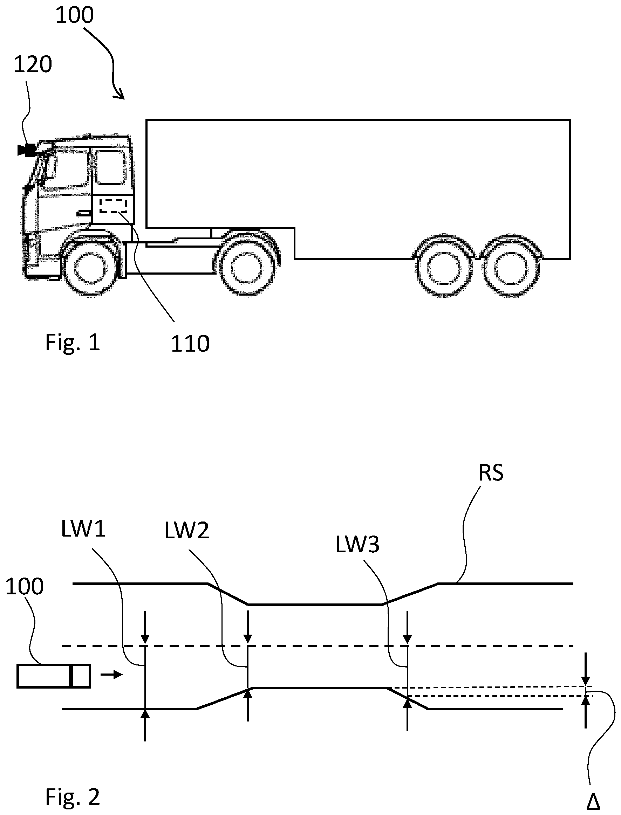

Fig. 1 depicts a vehicle 100 according to an example embodiment of the present invention. The vehicle 100 is here a heavy-duty truck in the form a truck and trailer combination. The vehicle 100 is equipped with a lane departure warning and/or lane keeping assistance system which comprises a perception sensor 120, here in the form of a forward directed camera which is mounted at the front of the vehicle 100 so that it can view the road ahead of the vehicle 100 during driving.

Even though the vehicle 100 is here a heavy-duty truck, the invention is applicable to any other type of vehicle which uses a lane departure warning and/or lane keeping driver assistance system.

In particular, the forward directed camera 120 is configured to monitor lane markings during driving of the vehicle 100, wherein the system is configured to warn the driver and/or automatically keep the vehicle 100 within the lane markings during driving. The system is here constituted by the camera 120 and by a vehicle control unit 110 which is configured to control the steering of the vehicle 100 in order to keep the vehicle 100 within the lane markings and/or to issue a warning signal if the vehicle 100 departs, or is about to depart, from the lane defined by the lane markings. The system may comprise further perception sensors (not shown), such as further cameras, LIDAR sensors, RADAR sensors etc.

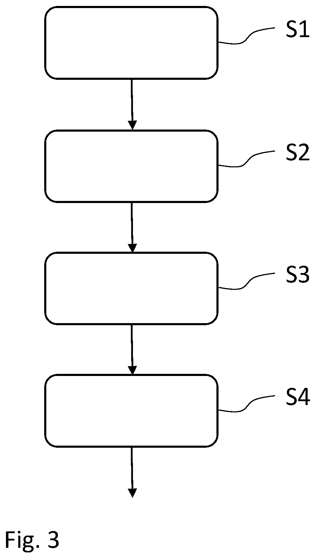

Fig. 2 depicts a schematic view from above of a road section RS on which the vehicle 100 is travelling and fig. 3 depicts a flowchart of a method according to an embodiment of the invention. With respect to especially figs. 2 and 3, embodiments of a method according to the first aspect will be described.

Accordingly, a method for automatically reactivating a lane departure warning and/or lane keeping driver assistance system of a vehicle 100 will be described. The method comprises:
S1: deactivating the system at a deactivation time point;
S2: identifying a first road condition which is associated with the deactivation time point when the system is being deactivated, wherein the first road condition is indicative of a driving situation when the driver wants the system to be deactivated;
S3: setting a reactivation threshold value, wherein the reactivation threshold value is set based on the identified first road condition and defines a limit for when the first road condition no longer applies; and
S4: automatically reactivating the system when it is determined that the reactivation threshold value is reached.

Determining when the reactivation threshold is reached is preferably done by monitoring the road conditions during driving of the vehicle 100 along the road section RS, wherein the road conditions are preferably monitored by use of the perception sensor 120 and/or by map data as mentioned herein.

The method is preferably implemented in e.g. the vehicle control unit 110 as shown in fig. 1, i.e. the vehicle control unit 110 is preferably a vehicle control unit 110 according to the second aspect of the invention.

Deactivating the system is performed when the driver manually initiates a deactivation command. For example, the deactivation command may be initiated by the driver of the vehicle 100 which manually deactivates the system via a HMI, such as via a HMI (not shown) of the vehicle 100. For example, the HMI may be a button, a touch screen on a vehicle dashboard or the like. Additionally, the deactivation command may be initiated by the driver performing a driving manoeuvre which is above a predetermined driver manoeuvre threshold value. The driving manoeuvre may for example be a steering manoeuvre which the driver performs, such as performing a large steering change and/or a rapid steering change which is above the predetermined driver manoeuvre threshold value.

Additionally, deactivating the system may be performed automatically when a predetermined deactivation threshold value is reached.

The first road condition shown in fig. 2 is, according to a first alternative of the invention, a lane width LW2 identified at the deactivation time point when the system is being deactivated. As such, the identified lane width LW2 defines a lane width threshold below which the driver wants the system to be deactivated. As shown in fig. 2, the lane width of the road section RS is first relatively wide, LW1, and is subsequently reduced to LW2, i.e. LW1 > LW2.

The reactivation threshold value is set based on the identified lane width LW2, and may also be set together with a specific lane width safety margin Δ, resulting in a reactivation threshold value LW3 which is at least defined by a larger lane width than the identified lane width LW2, i.e. LW3 = LW2 + Δ. The lane widths LW1, LW2 and LW3 may be identified by use of the camera 120 of the vehicle 100. Additionally, or alternatively, the lane widths may also be identified by use of map data and by a global position sensor, e.g. by use of a global navigation and satellite system (not shown), such as GPS of the vehicle 100.

According to a second alternative of the invention, the first road condition is a road curvature identified at the deactivation time point when the system is being deactivated, wherein the identified road curvature defines a road curvature threshold above which the driver wants the system to be deactivated. The road curvature may be defined by e.g. a curvature radius of the identified road curvature. Accordingly, a large or sharp road curvature may be defined by a relatively small curvature radius, whilst a small road curvature may be defined by a relatively large curvature radius, such as a substantially straight road section. As in the above, the road curvature may be identified by use of the perception sensor 120 and/or by map data.

Additionally, the first road condition may be indicative of a road work area Accordingly, the reactivation threshold value may thereby be defined by a situation when the road work area ends.

The method may further comprise informing the driver when the system is deactivated. This may e.g. be done by an audio signal in the vehicle 100 and/or by a visual notification on the above-mentioned dashboard. In a similar manner, the method may further comprise informing the driver when the system is automatically reactivated.

Accordingly, in view of the above, the first road condition is one of the following:
- an identified road lane width LW2, and/or an identified average road lane width,
- an identified road curvature, and/or an identified average road curvature value.

In further examples not covered by the invention, the first road condition may further be at least one of the following:
- an identified road work area,
- a type of road, such as a country road,
- an identified road sign, such as a road work road sign, a speed limit road sign, a road type road sign,
- traffic jam,
- a weather condition, such as a temperature value, ice or snow, rain etc.

The identified road curvature is preferably an absolute road curvature value, or an average absolute road curvature value, e.g. defined by the above-mentioned curvature radius.

When, in the example method not covered by the claims, the first road condition is a type of road, such as a country road, the set reactivation threshold value may be defined as when the type of road ends, i.e. when leaving the country road and for example entering a highway.

In the example method not covered by the claims, the first road condition may be at least one of the following:
- an identified road width, or an average identified road width,
- a bridge,
- a low friction road, such as an icy and/or snowy road.

It is to be understood that the present invention is not limited to the embodiments described above and illustrated in the drawings; rather, the skilled person will recognize that many changes and modifications may be made within the scope of the appended claims.

## Claims

1. A method for automatically reactivating a lane departure warning and/or lane keeping driver assistance system of a vehicle (100), comprising:
- deactivating (S1) the system at a deactivation time point;
- identifying (S2) a first road condition which is associated with the deactivation time point when the system is being deactivated, wherein the first road condition is indicative of a driving situation when the driver wants the system to be deactivated;
- setting (S3) a reactivation threshold value, wherein the reactivation threshold value is set based on the identified first road condition and defines a limit for when the first road condition no longer applies; and
- automatically (S4) reactivating the system when it is determined that the reactivation threshold value is reached, **characterized in that**,
deactivating the system is performed when the driver manually initiates a deactivation command, and
wherein the first road condition is a lane width (LW2) identified at the deactivation time point when the system is being deactivated, wherein the identified lane width (LW2) defines a lane width threshold below which the driver wants the system to be deactivated, wherein the reactivation threshold value is set based on the lane width threshold, or wherein the first road condition is a road curvature identified at the deactivation time point when the system is being deactivated, wherein the identified road curvature defines a road curvature threshold above which the driver wants the system to be deactivated, wherein the reactivation threshold value is set based on the road curvature threshold.

2. The method according to claim 1, wherein the deactivation command is initiated by the driver manually deactivating the system via a human machine interface (HMI), such as via a HMI of the vehicle (100).

3. The method according to claim 1, wherein the deactivation command is initiated by the driver performing a driving manoeuvre which is above a predetermined driver manoeuvre threshold value.

4. The method according to claim 3, wherein the driving manoeuvre is a steering manoeuvre and the predetermined driver manoeuvre threshold value is a steering manoeuvre threshold value.

5. The method according to any one of the preceding claims, wherein the reactivation threshold value is at least set based on the identified lane width (LW2) together with a specific lane width safety margin (Δ), resulting in a reactivation threshold value (LW3) which is at least defined by a larger lane width than the identified lane width (LW2).

6. The method according to any one of the preceding claims, further comprising informing the driver when the system is deactivated.

7. The method according to any one of the preceding claims, further comprising informing the driver when the system is automatically reactivated.

8. The method according to any one of the preceding claims, wherein the first road condition is identified by use of at least one vehicle perception sensor (120), such as a perception sensor of the system, and/or by use of data from a database, such as map data from a map database.

9. A vehicle control unit (110) for automatically reactivating a lane departure warning and/or lane keeping driver assistance system of a vehicle (100), the vehicle control unit (110) being configured to:
- deactivate the system at a deactivation time point;
- identify a first road condition which is associated with the deactivation time point when the system is being deactivated, wherein the first road condition is indicative of a driving situation when the driver wants the system to be deactivated;
- set a reactivation threshold value, wherein the reactivation threshold value is set based on the identified first road condition and defines a limit for when the first road condition no longer applies; and
- automatically reactivate the system when it is determined that the reactivation threshold value is reached, **characterized in that**,
deactivating the system is performed when the driver manually initiates a deactivation command, and
wherein the first road condition is a lane width (LW2) identified at the deactivation time point when the system is being deactivated, wherein the identified lane width (LW2) defines a lane width threshold below which the driver wants the system to be deactivated, wherein the reactivation threshold value is set based on the lane width threshold, or
wherein the first road condition is a road curvature identified at the deactivation time point when the system is being deactivated, wherein the identified road curvature defines a road curvature threshold above which the driver wants the system to be deactivated, wherein the reactivation threshold value is set based on the road curvature threshold.

10. A vehicle (100) comprising a lane departure warning and/or lane keeping driver assistance system, and further comprising the vehicle control unit (110) according to claim 9.

## Patentansprüche

1. Verfahren zur automatischen Reaktivierung eines Spurabweichungswarnungs- und/oder Spurhaltesystems eines Fahrzeugs (100), umfassend:
- Deaktivieren (S1) des Systems zu einem Deaktivierungszeitpunkt;
- Identifizieren (S2) eines ersten Straßenzustands, der mit dem Deaktivierungszeitpunkt verbunden ist, wenn das System deaktiviert wird, wobei der erste Straßenzustand eine Fahrsituation anzeigt, in der der Fahrer die Deaktivierung des Systems wünscht;
- Einstellen (S3) eines Reaktivierungsschwellenwerts, wobei der Reaktivierungsschwellenwert auf der Grundlage des identifizierten ersten Straßenzustands eingestellt wird und eine Grenze dafür definiert, wann der erste Straßenzustand nicht mehr gilt; und
- automatisches (S4) Reaktivieren des Systems, wenn festgestellt wird, dass der Reaktivierungsschwellenwert erreicht ist, **dadurch gekennzeichnet, dass** die Deaktivierung des Systems durchgeführt wird, wenn der Fahrer manuell einen Deaktivierungsbefehl auslöst, und
wobei der erste Straßenzustand eine Fahrspurbreite (LW2) ist, die zu dem Deaktivierungszeitpunkt identifiziert wird, wenn das System deaktiviert wird, wobei die identifizierte Spurbreite (LW2) einen Spurbreitenschwellenwert definiert, bei dessen Unterschreitung der Fahrer die Deaktivierung des Systems wünscht, wobei der Reaktivierungsschwellenwert auf der Grundlage des Spurbreitenschwellenwerts festgelegt wird, oder wobei der erste Straßenzustand eine Straßenkrümmung ist, die zu dem Deaktivierungszeitpunkt identifiziert wird, wenn das System deaktiviert wird, wobei die identifizierte Straßenkrümmung einen Straßenkrümmungsschwellenwert definiert, bei dessen Überschreitung der Fahrer die Deaktivierung des Systems wünscht, wobei der Reaktivierungsschwellenwert basierend auf der Grundlage des Straßenkrümmungsschwellenwerts eingestellt wird.

2. Verfahren nach Anspruch 1, wobei der Deaktivierungsbefehl durch den Fahrer ausgelöst wird, indem er das System manuell über eine Mensch-Maschine-Schnittstelle (HMI), beispielsweise über eine HMI des Fahrzeugs (100) deaktiviert.

3. Verfahren nach Anspruch 1, wobei der Deaktivierungsbefehl dadurch ausgelöst wird, dass der Fahrer ein Fahrmanöver durchführt, das oberhalb eines vorbestimmten Fahrmanöverschwellenwerts liegt.

4. Verfahren nach Anspruch 3, wobei das Fahrmanöver ein Lenkmanöver ist und der vorbestimmte Fahrmanöverschwellenwert ein Lenkmanöverschwellenwert ist.

5. Verfahren nach einem der vorhergehenden Ansprüche, wobei der Reaktivierungsschwellenwert mindestens auf der Grundlage der identifizierten Spurbreite (LW2) zusammen mit einer spezifischen Spurbreiten-Sicherheitsmarge (Δ) festgelegt wird, was zu einem Reaktivierungsschwellenwert (LW3) führt, der mindestens durch eine größere Spurbreite als die identifizierte Spurbreite (LW2) definiert ist.

6. Verfahren nach einem der vorhergehenden Ansprüche, ferner umfassend das Informieren des Fahrers, wenn das System deaktiviert ist.

7. Verfahren nach einem der vorhergehenden Ansprüche, ferner umfassend das Informieren des Fahrers, wenn das System automatisch reaktiviert wird.

8. Verfahren nach einem der vorhergehenden Ansprüche, wobei der erste Straßenzustand durch Verwendung mindestens eines Fahrzeugwahrnehmungssensors (120), wie einem Wahrnehmungssensor des Systems, und/oder durch Verwendung von Daten aus einer Datenbank, wie Kartendaten aus einer Kartendatenbank, identifiziert wird.

9. Fahrzeugsteuereinheit (110) zur automatischen Reaktivierung eines Spurabweichungswarnungs- und/oder Spurhaltesystems eines Fahrzeugs (100), wobei die Fahrzeugsteuereinheit (110) konfiguriert ist, zum:
- Deaktivieren des Systems zu einem Deaktivierungszeitpunkt;
- Identifizieren eines ersten Straßenzustands, der mit dem Deaktivierungszeitpunkt verbunden ist, wenn das System deaktiviert wird, wobei der erste Straßenzustand eine Fahrsituation anzeigt, in der der Fahrer die Deaktivierung des Systems wünscht;
- Einstellen eines Reaktivierungsschwellenwerts, wobei der Reaktivierungsschwellenwert auf der Grundlage des identifizierten ersten Straßenzustands eingestellt wird und eine Grenze dafür definiert, wann der erste Straßenzustand nicht mehr gilt; und
- automatisches Reaktivieren des Systems, wenn festgestellt wird, dass der Reaktivierungsschwellenwert erreicht ist, **dadurch gekennzeichnet, dass** die Deaktivierung des Systems durchgeführt wird, wenn der Fahrer manuell einen Deaktivierungsbefehl auslöst, und
wobei der erste Straßenzustand eine Spurbreite (LW2) ist, die zu dem Deaktivierungszeitpunkt identifiziert wird, wenn das System deaktiviert wird, wobei die identifizierte Spurbreite (LW2) einen Spurbreitenschwellenwert definiert, bei dessen Unterschreitung der Fahrer die Deaktivierung des Systems wünscht, wobei der Reaktivierungsschwellenwert auf der Grundlage des Spurbreitenschwellenwerts festgelegt wird, oder wobei der erste Straßenzustand eine Straßenkrümmung ist, die zum Deaktivierungszeitpunkt identifiziert wird, wenn das System deaktiviert wird, wobei die identifizierte Straßenkrümmung einen Straßenkrümmungsschwellenwert definiert, bei dessen Überschreitung der Fahrer die Deaktivierung des Systems wünscht, wobei der Reaktivierungsschwellenwert auf der Grundlage des Straßenkrümmungsschwellenwerts festgelegt wird.

10. Fahrzeug (100) umfassend ein Spurabweichungswarnungs- und/oder Spurhaltesystem, und ferner umfassend die Fahrzeugsteuereinheit (110) nach Anspruch 9.

## Revendications

1. Procédé de réactivation automatique d'un système d'assistance au conducteur d'avertissement de sortie de voie et/ou de maintien de voie d'un véhicule (100), comprenant :
- la désactivation (S1) du système à un moment de désactivation ;
- l'identification (S2) d'un premier état de la route associé au moment de la désactivation du système, le premier état de la route indiquant une situation de conduite lorsque le conducteur souhaite désactiver le système ;
- la fixation (S3) d'une valeur seuil de réactivation, la valeur seuil de réactivation étant fixée sur la base de la première condition routière identifiée et définissant une limite pour le moment où la première condition routière ne s'applique plus ; et
- la réactivation automatique (S4) du système lorsqu'il est déterminé que la valeur seuil de réactivation est atteinte, **caractérisé en ce que** la désactivation du système est effectuée lorsque le conducteur lance manuellement une commande de désactivation, et
la première condition routière est une largeur de voie (LW2) identifiée au moment de la désactivation du système, la largeur de voie identifiée (LW2) définissant un seuil de largeur de voie en dessous duquel le conducteur souhaite que le système soit désactivé, la valeur seuil de réactivation étant définie en fonction du seuil de largeur de voie, ou la première condition routière étant une courbure de la route identifiée au moment de la désactivation du système, la courbure de la route identifiée définissant un seuil de courbure de route au-dessus duquel le conducteur souhaite que le système soit désactivé, la valeur seuil de réactivation étant fixée sur la base du seuil de courbure de la route.

2. Procédé selon la revendication 1, dans lequel la commande de désactivation est lancée par le conducteur désactivant manuellement le système via une interface homme-machine (IHM), telle que via une IHM du véhicule (100).

3. Procédé selon la revendication 1, dans lequel la commande de désactivation est initiée par le conducteur effectuant une manœuvre de conduite qui est au-dessus d'une part valeur seuil de manœuvre de conducteur prédéterminée.

4. Procédé selon la revendication 3, dans lequel la manœuvre de conduite est une manœuvre de direction et la valeur seuil de manœuvre de conducteur prédéterminée est une valeur seuil de manœuvre de direction.

5. Procédé selon l'une quelconque des revendications précédentes, dans lequel la valeur seuil de réactivation est au moins fixée sur la base de la largeur de voie identifiée (LW2) conjointement avec une marge de sécurité de largeur de voie spécifique (Δ), ce qui donne une valeur seuil de réactivation (LW3) qui est au moins définie par une largeur de voie supérieure à la largeur de voie identifiée (LW2).

6. Procédé selon l'une quelconque des revendications précédentes, comprenant en outre l'information du conducteur lorsque le système est désactivé.

7. Procédé selon l'une quelconque des revendications précédentes, comprenant en outre l'information du conducteur lorsque le système est automatiquement réactivé.

8. Procédé selon l'une quelconque des revendications précédentes, dans lequel la première condition routière est identifiée par l'utilisation d'au moins un capteur de perception de véhicule (120), tel qu'un capteur de perception du système, et/ou par l'utilisation de données provenant d'une base de données, telles que des données cartographiques provenant d'une base de données, telles que des données cartographiques d'une base de données cartographiques.

9. Unité de commande de véhicule (110) destinée à réactiver automatiquement un système d'assistance au conducteur d'avertissement de sortie de voie et/ou de maintien de voie d'un véhicule (100), l'unité de commande de véhicule (110) étant configurée pour :
- désactiver le système à un moment de désactivation ;
- identifier une première condition routière associée au moment de la désactivation du système, dans la première condition routière indiquant une situation de conduite lorsque le conducteur souhaite désactiver le système ;
- fixer une valeur seuil de réactivation, la valeur seuil de réactivation étant fixée sur la base de la première condition routière identifiée et définissant une limite pour le moment où la première condition routière ne s'applique plus ; et
- réactiver automatiquement le système lorsqu'il est déterminé que la valeur seuil de réactivation est atteinte, **caractérisée en ce que** la désactivation du système est effectuée lorsque le conducteur lance manuellement une commande de désactivation, et
la première condition routière étant une largeur de voie (LW2) identifiée au moment de la désactivation du système, la largeur de voie identifiée (LW2) définissant un seuil de largeur de voie en dessous duquel le conducteur souhaite que le système soit désactivé, la valeur seuil de réactivation étant définie en fonction du seuil de largeur de voie, ou la première condition routière étant une courbure de route identifiée au moment de désactivation lorsque le système est désactivé, la courbure de route identifiée définissant un seuil de courbure de route au-dessus duquel le conducteur souhaite que le système soit désactivé, la valeur seuil de réactivation étant fixée sur la base du seuil de courbure de route.

10. Véhicule (100) comprenant un système d'avertissement de sortie de voie et/ou d'assistance au conducteur de maintien de voie, et comprenant en outre l'unité de commande de véhicule (110) selon la revendication **9.**
